# EUROPEAN PATENT APPLICATION

(11) **EP 4 335 293 A1**
(43) Date of publication of application: **13.03.2024**
(21) Application number: 21939855.9
(22) Date of filing: 07.05.2021
(51) Int. Cl.: A01N 37/36, A01P 21/00, C05F 11/10

(54) **PLANT ACTIVATOR**

(71) Applicant: IBIDEN CO., LTD., Ogaki-shi, Gifu 503-8604 (JP)
(72) Inventor: OHNO, Katsuya, Ogaki-shi, Gifu 503-8604 (JP); NOHARA, Tomohiro, Ogaki-shi, Gifu 503-8604 (JP); TAKADA, Kumiko, Ogaki-shi, Gifu 503-8604 (JP)
(74) Representative: Hoefer & Partner Patentanwälte mbB
(86) International application number: PCT/JP2021/017545
(87) International publication number: WO 2022/234663

(57) **Abstract**

The objective of the invention is to provide a plant activator with superior plant growth-promoting effect and low toxicity and soil contamination. A plant activator comprising, as an active ingredient, a hydroxy fatty acid derivative of general formula (I) and/or (II):

HOOC-(R¹)-CH(OH)-CH(OH)-CH=CH-CH(OH)-R² (I),

HOOC-(R¹)-CH(OH)-CH=CH-CH(OH)-CH(OH)-R² (II),

(wherein, R¹ is a straight or branched hydrocarbon group with 4 to 12 carbon atoms, optionally comprises one or more double bonds and/or OH groups, and the position of the double bond is not limited, provided that the double bond is comprised, and R² is a straight or branched hydrocarbon group with 2 to 8 carbon atoms, optionally comprises one or more double bonds and/or OH groups, and the position of the double bond is not limited, provided that the double bond is comprised) or a salt or an ester thereof.

## Description

### TECHNICAL FIELD

The present invention relates to a plant activator.

### BACKGROUND ART

For the purpose of promoting the plant growth, some measures, such as an optimization of temperature conditions or daylight conditions, or a fertilization, have been implemented for a long time. However, those measures have their limitations. For example, an attempt for increasing an amount of a fertilizer to be used for a fertilization does not accomplish any further desirable growth-promoting effect beyond a certain level, and further, applying too much fertilizer would cause a plant growth disorder and may result in a contamination of the soil.

Therefore, in addition to those measures, there has been some reports regarding a method for activating plants using a plant activator which has a plant growth control activity such as growth promotion, sleep suppression and stress resistance. For example, Reference 1 describes a plant activator comprising a ketol fatty acid with 4 to 24 carbon atoms as an active ingredient. Reference 2 describes a plant activator comprising a fatty acid metabolite obtained by a metabolism of a fatty acid with 4 to 30 carbon atoms by proteobacteria under a dissolved oxygen concentration of 0.1 to 8 mg/L.

### PRIOR ART DOCUMENT

### Patent Document

Patent Document 1: JP 2001-131006 A
Patent Document 2: WO 2018/047918

### SUMMERY OF THE INVENTION

### PROBLEM TO BE SOLVED BY THE INVENTION

There has been a need for a plant activator having a better growth-promoting effect than the plant activator containing a ketol fatty acid as an active ingredient described in Patent Document 1 or the plant activator described in Patent Document 2, and a superior dispersibility and homogeneity for spraying or immersion.

An object of the present invention is to provide a plant activator having superior plant growth-promoting effect as well as low toxicity and soil contamination.

### MEANS TO SOLVE THE PROBLEM

The present invention relates to a plant activator comprising, as an active ingredient, a hydroxy fatty acid derivative of general formula (I), or a salt or an ester thereof,

HOOC-(R¹)-CH(OH)-CH(OH)-CH=CH-CH(OH)-R² (I),

and/or of general formula (II), or a salt or an ester thereof,

HOOC-(R¹)-CH(OH)-CH=CH-CH(OH)-CH(OH)-R² (II),

wherein
R¹ is a straight or branched hydrocarbon group with 4 to 12 carbon atoms, and optionally comprises one or more double bonds and/or OH groups, and the position of the double bond is not limited, provided that the double bond is comprised, and
R² is a straight or branched hydrocarbon group with 2 to 8 carbon atoms, and optionally comprises one or more double bonds and/or OH groups, and the position of the double bond is not limited, provided that the double bond is comprised.
It may be particularly preferable that R¹ is -(CH₂)ₙ- (wherein n is an integer from 4 to 12).

It may be preferable for the plant activator that the hydroxy fatty acid derivative is a hydroxy fatty acid derivative wherein R¹ hydrocarbon group of the hydroxy fatty acid derivative has 6 to 8 carbon atoms, and R² hydrocarbon group of the hydroxy fatty acid derivative has 4 to 6 carbon atoms.

It may be preferable for the plant activator that the R¹ of the hydroxy fatty acid derivative is -(CH₂)ₙ- (wherein n is an integer from 4 to 12), and R² of the hydroxy fatty acid derivative is CₙH₂ₙ₊₁- (wherein n is an integer from 2 to 12)

It may be preferable for the plant activator that R¹ of the hydroxy fatty acid derivative is an alkylene group (-(CH₂)₇-) with 7 carbon atoms, and R² of the hydroxy fatty acid derivative is an alkyl group (CH₃CH₂CH₂CH₂CH₂-) with 5 carbon atoms.

It may be preferable for the plant activator that the hydroxy fatty acid derivative is hydroxyoctadecaenoic acid.

It may be preferable for the plant activator that the hydroxy fatty acid derivative is 9,10,13-trihydroxy-11-octadecaenoic acid.

It may be preferable for the plant activator that the hydroxy fatty acid derivative is 9,12,13-trihydroxy-10-octadecaenoic acid.

The term "octadecaenoic acid" is a conventional notation (for example, see JP H3-14539 A), and "9,10,13-trihydroxy-11-octadecaenoic acid" mentioned above can be also denoted as "9,10,13-trihydroxyoctadeca-11-enoic acid" or "9,10,13-trihydroxy-11-octadecenoic acid". Similarly, "9,12,13-trihydroxy-10-octadecaenoic acid" mentioned above can be also denoted as "9,12,13-trihydroxyoctadeca-10-enoic acid" or "9,12,13-trihydroxy-10-octadecenoic acid". Incidentally, in Examples of the present invention, the trade name by manufacturer is also indicated in parentheses. The above description applies to all "octadecaenoic acid" as used herein, in the claims, drawings, and abstract.

The structural formula of "9,10,13-trihydroxy-11-octadecaenoic acid" is shown in the structural formula (1) below.

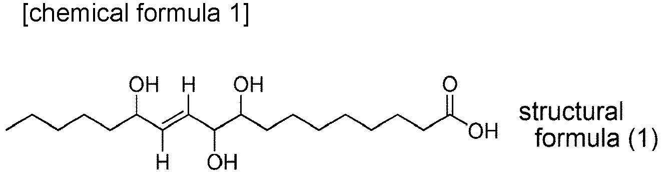

The structural formula of "9,12,13-trihydroxy-10-octadecaenoic acid" is shown in structural formula (2) below.

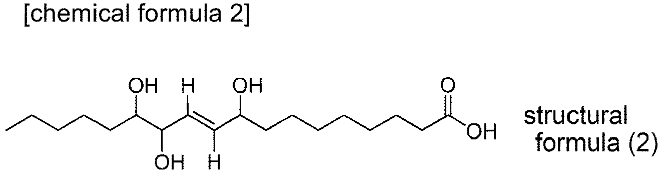

It may be preferable that the plant activator further comprises a surfactant and/or a diluent or a carrier.

It may be preferable that a concentration of the hydroxy fatty acid derivative or the salt or the ester thereof is 0.05 to 5 mg/L.

It may be preferable that the plant activator is used as a spraying agent or an immersion agent for contacting with plant stems, leaves, or roots, or a soil injection agent.

It may be preferable that the plant activator is applied to at least one plant selected from plants in family Brassicaceae, Poaceae, Fabaceae, Solanaceae, Rosaceae, Amaranthaceae, Cucurbitaceae, or Malvaceae.

### EFFECTS OF THE INVENTION

The plant activator of the present invention is easily degradable in the environment, thus providing low toxicity and low soil contamination, and has a superior plant growth-promoting effect.

### BRIEF DESCRIPTION OF THE DRAWINGS

FIG 1 is a graph showing the growth-promoting effect on plant weight of potherb mustard ("Mizuna", Brassica rapa var. laciniifolia), Brassicaceae family.
FIG 2 is a graph showing the growth-promoting effect on leaf length of potherb mustard ("Mizuna", Brassica rapa var. laciniifolia), Brassicaceae family.
FIG 3 is a graph showing the growth-promoting effect on plant weight of spinach, Amaranthaceae family.
FIG 4 is a graph showing the growth-promoting effect on leaf length of spinach, Amaranthaceae family.
FIG 5 is a graph showing the expression level of resistance-inducing genes in tomato, Solanaceae family.
FIG 6 is a graph showing the expression level of resistance-inducing genes in cucumber, Cucurbitaceae family.
FIG 7 is a graph showing the expression level of resistance-inducing genes in Arabidopsis thaliana, Brassicaceae family.

### EMBODIMENT FOR CARRYING OUT THE INVENTION

### Plant activator

A plant activator of the present invention is characterized in that it includes, as an active ingredient, a hydroxy fatty acid derivative of general formula (I), or a salt or an ester thereof,

HOOC-(R¹)-CH(OH)-CH(OH)-CH=CH-CH(OH)-R² (I),

and/or of general formula (II), or a salt or an ester thereof,

HOOC-(R¹)-CH(OH)-CH=CH-CH(OH)-CH(OH)-R² (II),

wherein
R¹ is a straight or branched hydrocarbon group with 4 to 12 carbon atoms, and optionally comprises one or more double bonds and/or OH groups, and the position of the double bond is not limited, provided that the double bond is comprised, and
R² is a straight or branched hydrocarbon group with 2 to 8 carbon atoms, and optionally comprises one or more double bonds and/or OH groups, and the position of the double bond is not limited, provided that the double bond is comprised. It may be particularly preferable that R¹ is -(CH₂)ₙ- (wherein n is an integer from 4 to 12). The present invention also relates to a plant activator containing, as active ingredients, the compounds of general formula (I) and/or (II) encompassing all geometric and stereoisomers, or salts or esters thereof.

Throughout the specification and the corresponding claims "plant activation" refers to adjusting the plant growth activity to being activated or maintained in some way, and is related to the concept that encompasses plant growth regulating actions including a growth promotion (which refers to the concept that includes an enlargement of leaves or stems, and a growth promotion of tubers or tuberous roots), sleep suppression, inducing and imparting a stress (for example, diseases) resistance, and anti-aging. For example, a plant activator of the present invention can render a growth-promoting effect on plants by being contacted to a part of plant leaves, stems, or roots. The plant activator of the present invention may provide a growth-promoting effect on the plants, given that when compared to untreated plants, an increase in leaf length and leaf weight, which is considered as one of the plant growth indicators, and a growth promotion of tubers or tuberous roots can be seen in plant body which is inoculated with the plant activator of the present invention. Using the plant activator of the present invention may promote the growth of plant bodies and result in an increase in yield of plant bodies such as vegetables, grains, and fruits. The plant growth-promoting effect of the plant activator of the present invention is significantly high, and thus, resulting in an excellent yield increasing effect and improved harvesting efficiency of commercial crops.

9(S),10(S),13(S)-11(E)-trihydroxyoctadecaenoic acid and/or 9(S),12(S),13(S)-10(E)-trihydroxyoctadecaenoic acid and their derivatives, each of which may be used in the present invention as an exemplary examples of the hydroxy fatty acid derivatives, are suitable as a plant activator of the present invention. Incidentally, as used herein, hydroxy fatty acid or its derivatives including hydroxyoctadecaenoic acid or its derivatives are collectively referred to as hydroxy fatty acid derivatives.

Exemplary examples of a salt of the hydroxy fatty acid derivatives of the present invention include, but not limited to, one or more of agriculturally acceptable salts such as ammonium salts, alkyl ammonium salts such as tetramethyl ammonium salts, alkaline earth metal salts such as calcium salts and magnesium salts, alkali metal salts such as sodium salts, lithium salts and potassium salts, metal salts such as cobalt salts and manganese salts, and salts contained in, for example, fertilizers. For example, by using a hydroxy fatty acid derivative in salt form, a high water solubility and/or low deliquescence may be obtained, resulting in easier handling of the hydroxy fatty acid derivative. In the present invention, the salt of hydroxy fatty acid derivative may include salts of hydroxy fatty acid derivative in various forms, for example, a salt formed with hydroxy fatty acid derivative and an acid or base, a hydrate of its salt and a mixture of those salts.

Exemplary examples of an ester of the hydroxy fatty acid derivatives of the present invention include, but not limited to, methyl ester, ethyl ester, propyl ester, butyl ester, pentyl ester, isopentyl ester and octyl ester.

As described below, the plant activator containing a hydroxy fatty acid derivative of the present invention is characterized by the fact that when applied to plants, it has a significantly superior plant growth-promoting effect on plants compared to the known plant growth-promoting materials. This indicates that the plant activator of the present invention has a high plant growth-promoting effect. It also demonstrates that when the plant activator is applied to plants, it suppresses plant diseases through the expression of a resistance-inducing gene associated with the salicylic acid mediated signaling pathway or the jasmonate mediated signaling pathway, which constitutes a plant immune system against diseases.

With the context of the present invention the plant activator may include a surfactant and/or diluent or carrier having a compatibility suitable for use in the plant activator when necessary. For example, the diluent may increase a dispersibility of hydroxy fatty acid derivative, such as hydroxyoctadecaenoic acid, or a salt or an ester thereof. Further, the surfactant such as dispersion auxiliary agent or wetting agent, for example, may be included in the plant activator in order to increase a solubility or dispersibility of the hydroxy fatty acid derivative which can be used in the context of the present invention in a diluent. In this context, the additive component is not particularly limited as far as it is an agriculturally acceptable agent. The plant activator of the present invention may further include additional components, which can be generally used for, for example, agrochemical formulations, or other components useful for plants such as at least one of fertilizer components, other than surfactants, diluents or carriers.

The plant activator of the present invention only needs to include a hydroxy fatty acid derivative or a salt or an ester thereof, and the origin of the derivatives is not particularly limited. The hydroxy fatty acid derivatives or a salt or an ester thereof, including hydroxyoctadecaenoic acid, used in the context of the present invention may be obtained by chemical synthesis or microorganism synthesis, or by applying a microorganism-derived enzyme to a substrate such as fatty acid. The plant activator of the present invention only needs to include a desired concentration of a hydroxy fatty acid derivative, and in this context, for example, when hydroxyoctadecaenoic acid produced by microorganisms is used as a hydroxy fatty acid derivative, any mixture containing hydroxyoctadecaenoic acid may be used for the plant activator of the present invention. When the mixture contains, for example, a biosurfactant which is produced by microorganisms, it may possibly increase a dispersibility of the plant activator of the present invention without adding the aforementioned additive components. Even when the hydroxy fatty acid derivative itself is insoluble, it may be dispersed in water by being emulsified with biosurfactant.

The plant activator of the present invention may be applied to the plant by any method. The method is not limited as long as the plant activator will be in contact with the plant body, such as roots, stems and leaves. It may be applied in a way that the plant activator will directly contact with the plant body, or the plant activator may be applied to the cultivation carrier, such as soil, in which the plant body is settled. For example, the plant activator of the present invention may be used as a spraying agent or an immersion agent to make the plant activator contact with plant stems, leaves, or roots, or as a soil injection agent. Alternatively, the plant activator of the present invention may be used as a sustained-release preparation by being encapsulated in a porous structure or capsule, or by being impregnated in, for example, a sheet. For storage stability, it may also be powdered with an appropriate excipient by lyophilization or spray-drying. The plant activator of the present invention can provide a plant growth-promoting effect to the plant, resulting in an increase in the yield through the increased plant body mass, such as an increase in leaf length, plant weight, number of leaves and crop weight, as well as an enhanced harvest efficiency through the increased number of stems per plant, in the applied plant. It also suppresses plant diseases through an expression of resistance genes.

The plant activator of the present invention may promote plant growth and suppress disease by a simple treatment such as spraying, and thus there is no need to prepare any special equipment, which makes the present invention very advantageous also in this respect. Furthermore, since hydroxyoctadecaenoic acid, for example, is an oxide of a naturally occurring fatty acid, the plant activator of the present invention has a low environmental impact and causes almost no phytotoxicity on the plants to which the plant activator is applied.

An application of the hydroxy fatty acid derivative or a salt or an ester thereof, which is an active ingredient of the plant activator of the present invention, to the plant body and/or cultivation carriers may be done, for example, by the method in which the hydroxy fatty acid derivative or a salt or an ester thereof is applied to the plants and/or cultivation carriers in the liquid state, dissolved or dispersed in water and/or an aqueous solvent. For example, the liquid in which the hydroxy fatty acid derivative or a salt or an ester thereof is dissolved or dispersed may be sprayed or applied to the above-ground part (stems, leaves, for example) of plant body of the target plant. The plant activator of the present invention may be applied to the target plant once, for example, after budding and before harvest, or it may be applied in multiple times.

In the context of the present invention, the hydroxy fatty acid derivatives or a salt or an ester thereof may be used in the concentration of 500 mg/L or less. A preferable concentration of the hydroxy fatty acid derivatives or a salt or an ester thereof in the context of the present invention may depend on the plant species and conditions to which the plant activator of the present invention is applied, however, the concentration of 500 mg/L or more may cause phytotoxicity. Although the lower limit of the concentration of the hydroxy fatty acid derivatives or a salt or an ester thereof in the context of the present invention is not particularly limited, the concentration may preferably be 0.05 mg/L or more. In a preferred embodiment of the present invention, the concentration of the hydroxy fatty acid derivatives or a salt or an ester thereof may be from 0.01 to 100 mg/L.

The plants to which the plant activator of the present invention can be applied are not particularly limited, and the plant activator of the present invention may be applied to plants in general, and exemplary examples of plants include, for example, a plant in family Poaceae, Fabaceae, Solanaceae, Rosaceae, Amaranthaceae, Malvaceae, Cucurbitaceae, or Brassicaceae. For example, the plant activator of the present invention can effectively promote a growth of plant of family Poaceae, such as grass, rice, wheat and corn, of family Fabaceae, such as soybean, green bean, kidney bean and cassia, of family Solanaceae, such as tomato, eggplant, pepper, green pepper and potato, of family Rosaceae, such as strawberry, of family Amaranthaceae, such as spinach, of family Malvaceae, such as cotton grass, okra, of family Cucurbitaceae, such as cucumber, pumpkin and watermelon, of family Brassicaceae, such as Japanese mustard spinach Komatsuna and potherb mustard. The plant to be subjected for application may not be limited to a wildtype, and may be, for example, a mutant or transformant. The varieties of plant may not also be limited.

### EXAMPLES

The present invention will be illustrated in detail by way of the Examples below, although the present invention shall be not limited to those specific Examples.

### Example 1 Evaluation of the Mizuna (potherb mustard) growth

As Example 1, 9,10,13-trihydroxy-11-octadecaenoic acid (Larodan Fine Chemicals AB, 9(S),10(S),13(S)-trihydroxy-11(E)-octadecenoic acid in English: 9(S),10(S),13(S)-trihydroxy-11(E)-octadecenoic acid in Japanese, 200 mg/L ethanol solution) and 9,12,13-trihydroxy-10-octadecaenoic acid (Larodan Fine Chemicals AB, 9(S),12(S),13(S)-trihydroxy-10(E)-octadecenoic acid in English: 9(S),12(S),13(S)-trihydroxy-10(E)-octadecenoic acid in Japanese, 200 mg/L ethanol solution) were mixed in the ratio of 2:1, and the resulting mixture gave a trihydroxyoctadecaenoic acid solution.

As Comparative Examples, a plant activator containing ketol fatty acid or fatty acid metabolite prepared by the following method was used.

### Preparation of ketol fatty acid

10 mg of soybean lipoxidase (Sigma-Aldrich) was added to the linoleic acid suspension containing 1 g of linoleic acid, 0.15 g of potassium dihydrogenphosphate, and 100 mL of distilled water, and the reaction mixture was stirred for 24 hours to form peroxylipid 1. The formation of peroxylipid was identified by TLC comparison with a standard compound (developing solvent chloroform:methanol, 20:1, using sulfuric acid as coupler) and by the increase in absorbance at 234 nm. Further, it was identified by NMR that the main composition in the peroxylipid 1 was 13-HPODE ((9Z, 11E)-13-hydroperoxy-9, 11-octadecadienoic acid). To the resulting peroxylipid 1, 0.1mg of allene oxide synthase (Sigma-Aldrich) was added and stirred for 24 hours to form α-ketol fatty acid. The enzyme reaction was then quenched by adding dilute hydrochloric acid on ice to adjust the pH of reaction mixture to 3.0. The solution after whose pH was adjusted to 6.5 was used as ketol fatty acid (9-hydroxy-10-oxo-12(Z),15(Z)-octadecadienoic acid, 13-KODA) solution.

### Preparation of a plant activator containing fatty acid metabolites

### <pre-culturing step>

To 1L of water in the glass Erlenmeyer flask 20 g of peptone (Difco, enzymatic digest of protein), 1.5 g of magnesium sulfate heptahydrate, and 1.5 g of dipotassium hydrogenphosphate were dissolved, and the resulting solution was autoclaved at 121°C for 20 min to render it sterile, and after cooled to a room temperature, the bacterial solution containing a mixture of proteobacteria derived from activated sludge for a wastewater treatment (complex bacterial flora containing, for example, Azoarcus buckelii, Propionivibrio pelophilus, Thauera selenatis, Pandoraea pulmonicola, Pusillimonas noertemannii, Rhodovulum Rhodovulum kholense, Haematobacter massiliensis, Hyphomicrobium hollandicum, Chelatovorus multitrophus, Nitrosococcus halophilus, Thioalkalivibrio Thiocyanodenitrificans, Marinobacter hydrocarbonoclasticus, Halomonas xinjiangensis, Pseudomonas pertucinogena) was inoculated. The mouth of the Erlenmeyer flask was sealed with a silicone closure. After inoculation, cells in the flask were cultured at 20°C for 24 hours with shaking (120 rpm) using Bioshaker (Taitec, BR-23UM). The number of bacterial cells in the culture broth was 5 x 10⁸ cells/mL. After the culturing, the culture broth was subjected to the centrifugation at 15,000 x g, at the temperature of 20°C, and the bacterial cells were separated and collected from the culture broth.

### <fatty acid metabolism step>

To 1L of sterilized water in the glass Erlenmeyer flask 12 g of linoleic acid (FUJIFILM Wako Chemicals, first grade), 1.5 g of magnesium sulfate heptahydrate and 1.5 g of dipotassium hydrogenphosphate, and the whole amount of the bacterial cells obtained from the pre-culturing step were added. The bacterial cells in the flask were cultured at 20°C for 4 days with shaking (120 rpm) using Bioshaker (Taitec, BR-23UM) under the condition of a dissolved oxygen concentration of 4 mg/L. The decomposition of linoleic acid was observed through the analysis of the culture broth by measuring the absorbance at wavelength 230 nm using BioSpec-mini spectrophotometer (Shimadzu Scientific Instruments) to determine the concentration of peroxylipid, which is one of the intermediate products from the degradation of linoleic acid. The culture broth containing the bacterial cells after the culturing was used for a fatty acid metabolite contained in a plant activator containing a fatty acid metabolite.

Dilutions were prepared by adding distilled water to the aboveobtained trihydroxyoctadecaenoic acid solution, ketol fatty acid solution, and culture broth containing fatty acid metabolites, so that the final concentration of each of trihydroxyoctadecaenoic acid, ketol fatty acids, and fatty acid metabolites was 0.05 mg/L, and the resulting dilutions gave treatment solutions. A 72-well cell tray was filled with culture soil (TAKII & CO.,LTD, trade name "Tanemaki Baido"), and the forced sprouting seeds of potherb mustard were sown in. After budding, the potherb mustard seedlings were thinned out for two plants per cell. Light condition was set for 12 hours for light period/12 hours for dark period. Water was supplied by irrigating with an appropriate amount of tap water about once every four days. 9 and 12 days after sowing, the plants were treated with foliar spraying by spraying each of the treatment solutions (300 L/10a) to the above-ground part of plants using a sprayer. The negative control was not subjected for the spraying of the treatment solution ("no treatment area").

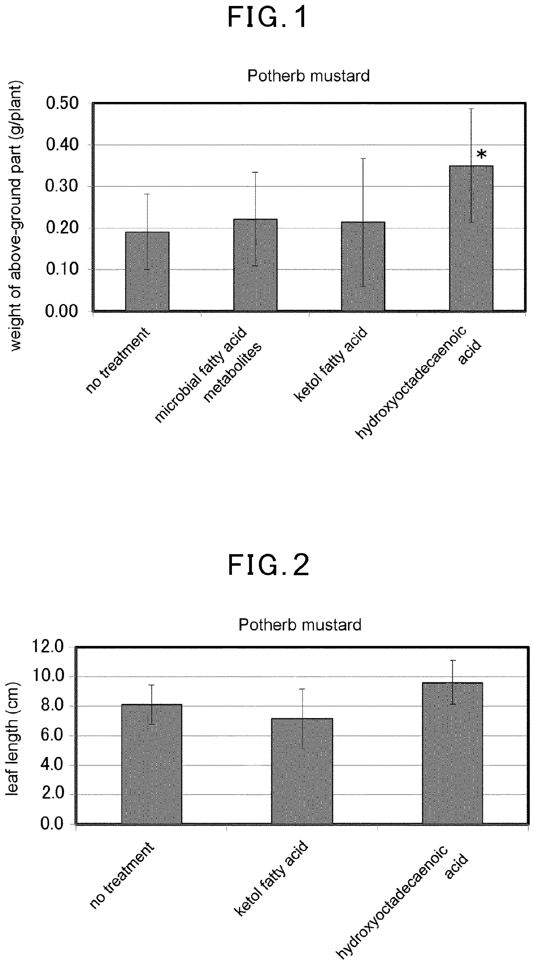

21 days after sowing, the plants were harvested and the wet weight of the above-ground part of plants per plant and the leaf length were measured. Results are shown in FIGs 1 and 2, respectively.

As shown in FIGs 1 and 2, both of the average of wet weight of the above-ground part and the leaf length of potherb mustard (n=20) in the treatment area to which the treatment solution containing hydroxyoctadecaenoic acid had been applied were increased compared to those in the no treatment area. The wet weight of the above-ground part was 0.35 g/plant in the hydroxyoctadecaenoic acid treated area, while the wet weight of the above-ground part in the no treatment area was 0.19 g/plant. The leaf length was 9.6 cm in the hydroxyoctadecaenoic acid treated area, while the leaf length in the no treatment area was 8.1 cm. The result of t-test indicated that the significant differences were observed in both wet weight of the above-ground part and leaf length in the hydroxyoctadecaenoic acid treated area compared to those in the untreated area. In contrast, the wet weight of the above-ground part has shown little increase in the treatment areas to which either of the fatty acid metabolites or the ketol fatty acid was applied as a treatment solution. Further, the leaf length was reduced in the treatment area to which the treatment solution containing ketol fatty acid was applied.

### Example 2 Evaluation of the spinach growth

A 72-well cell tray was filled with culture soil (TAKII & CO., LTD, trade name "Tanemaki Baido"), and the forced sprouting seeds of spinach were sown in. After budding, the spinach seedlings were thinned out for two plants per cell. Light condition was set for 12 hours for light period/12 hours for dark period. Water was supplied by irrigating with an appropriate amount of tap water about once every three days. 16 days after sowing, using the treatment solution containing trihydroxyoctadecaenoic acid prepared in Example 1, the plants were treated with foliar spraying by spraying the treatment solution (300 L/10a) to the above-ground part of plants using a sprayer. The negative control was not subjected for the spraying of the treatment solution ("no treatment area").

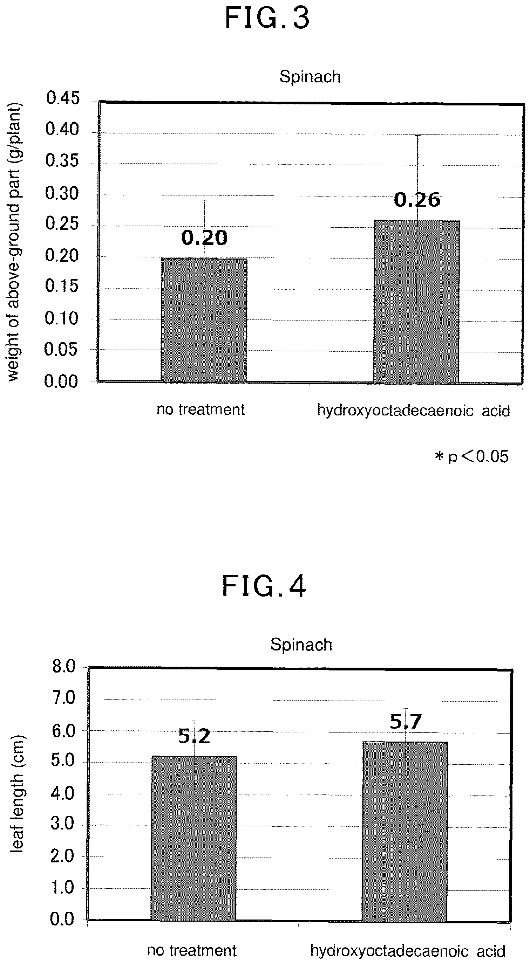

23 days after sowing, the plants were harvested and the wet weight of the above-ground part of plants per plant and the leaf length were measured. Results are shown in FIGs 3 and 4, respectively.

As shown in FIGs 3 and 4, both of the average of wet weight of the above-ground part and the leaf length of spinach (n=46) in the treatment area to which the treatment solution containing hydroxyoctadecaenoic acid had been applied were increased compared to those in the no treatment area. The wet weight of the above-ground part was 0.26 g/plant in the hydroxyoctadecaenoic acid treated area, while the wet weight of the above-ground part in the no treatment area was 0.20 g/plant. The leaf length was 5.7 cm in the hydroxyoctadecaenoic acid treated area, while the leaf length in the no treatment area was 5.2 cm. The result of t-test indicated that the significant differences were observed in both wet weight of the above-ground part and leaf length in the hydroxyoctadecaenoic acid treated area compared to those in the untreated area.

As shown in FIGs 1 to 4, the increase in the wet weight of the above-ground part and leaf length was observed for potherb mustard, Brassicaceae family and spinach, Amaranthaceae family. It demonstrates that the plant activator of the present invention has an excellent growth-promoting effect on plants.

### Example 3 Evaluation of resistance induction in tomatoes

Dilutions were prepared by adding distilled water to the trihydroxyoctadecaenoic acid (trihydroxyoctadecenoic acid) solution prepared in the first paragraph of Example 1 (ethanol solution of a mixture of 9,10,13-trihydroxy-11-octadecaenoic acid and 9,12,13-trihydroxy-10-octadecaenoic acid), so that the final concentrations of trihydroxyoctadecaenoic acid were 5 mg/L (5 ppm) and 50 mg/L (50 ppm), and the resulting dilutions gave two types of treatment solutions.

Tomato seedlings (variety: CF House Momotaro; purchased from IBIKO CORPORATION) at the 2 true leaf stage were replanted in 9 cm pots filled with culture soil (TAKII & CO.,LTD, trade name "Tanemaki Baido"). The temperature was kept constant at 30°C, and light condition was set for 12 hours for light period/12 hours for dark period using fluorescent light. Water was supplied by irrigating with an appropriate amount of tap water about once a day. 24 hours after replanting, using two types of the treatment solutions containing trihydroxyoctadecaenoic acid prepared above, the plants were treated with foliar spraying by spraying the treatment solution (10 mL/plant) to the above-ground part of plants using a sprayer. The distilled water was sprayed to the negative control ("no treatment area").

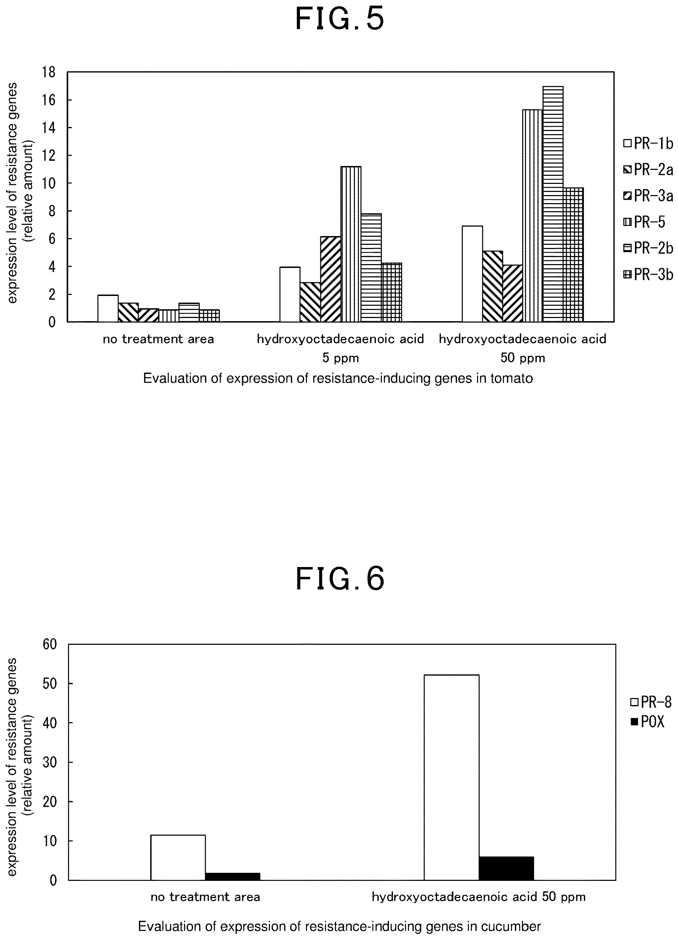

RNA was extracted from the true leaves of each tomato treated with respective treatment solutions 48 hours after the foliar spraying and from the true leaves of untreated tomatoes as a control, using a commercial RNA extraction kit (GPR1002, Viogene), and cDNA was prepared from the RNA, and the expression levels of resistance genes PR-1b, PR-2a, PR-2b, PR-3a, PR-3b, and PR-5 were examined using real-time PCR. The gene expression levels were normalized using the expression level of housekeeping gene. Three tomato seedlings from the respective treatment area were studied, and the results of an average value of the expression levels obtained are shown in FIG 5. The types of resistance genes measured were based on "Japanese Journal of Phytopathology, 2017, 83, 3-9.". The genes PR-1b, PR-2a, PR-3a, and PR-5 are resistance genes associated with the salicylic acid mediated signaling pathway, while the genes PR-2b and PR-3b are resistance genes associated with jasmonate mediated signaling pathway.

### Example 4 Evaluation of resistance induction in cucumber

A Dilution was prepared by adding distilled water to the trihydroxyoctadecaenoic acid (trihydroxyoctadecenoic acid) solution prepared in the first paragraph of Example 1 (ethanol solution of a mixture of 9,10,13-trihydroxy-11-octadecaenoic acid and 9,12,13-trihydroxy-10-octadecaenoic acid), so that the final concentration of trihydroxyoctadecaenoic acid was 50 mg/L (50 ppm), and the resulting dilution gave a treatment solution.

Cucumber seedlings (variety: Hokushin; purchased from IBIKO CORPORATION) at the 2 true leaf stage were replanted in 9 cm pots filled with culture soil (TAKII & CO.,LTD, trade name "Tanemaki Baido"). The temperature was kept constant at 25°C, and light condition was set for 12 hours for light period/12 hours for dark period using fluorescent light. Water was supplied by irrigating with an appropriate amount of tap water about once a day. 5 days after replanting, using the treatment solution containing trihydroxyoctadecaenoic acid prepared above, the plants were treated with foliar spraying by spraying the treatment solution (10 mL/plant) to the above-ground part of plants using a sprayer. The distilled water was sprayed to negative control ("no treatment area").

The expression levels of resistance genes PR-8 and POX were examined for the cucumbers treated with the treatment solution 72 hours after the foliar spraying and for the untreated cucumbers as controls, using the similar procedure to the one described in Example 3. Three cucumber seedlings from the respective treatment area were studied, and the results of an average value of the expression levels obtained are shown in FIG 6. The types of resistance genes measured were based on "Journal of Plant Molecular Breeding, 2016, 4(2), 33-40." and "Horticultural Research (Japan), 2011, 10(3), 429-433.". The genes PR-8 and POX are resistance genes associated with the salicylic acid mediated signaling pathway.

### Example 5 Evaluation of resistance induction in Arabidopsis thaliana

Dilutions were prepared by adding distilled water to the trihydroxyoctadecaenoic acid (trihydroxyoctadecenoic acid) solution prepared in the first paragraph of Example 1 (ethanol solution of a mixture of 9,10,13-trihydroxy-11-octadecaenoic acid and 9,12,13-trihydroxy-10-octadecaenoic acid), so that the final concentrations of trihydroxyoctadecaenoic acid were 4 mg/L (4 ppm) and 40 mg/L (40 ppm), and the resulting dilutions gave two types of treatment solutions.

Arabidopsis thaliana seeds (Col-0; purchased from Implant Innovations, Inc.) were sown in 3 cm x 3 cm x 3 cm rockwool (Yamato-plastic Co,. Ltd, Rockwool Block 60P) as solid medium at a planting density of 1 plant/1 cm². The temperature was kept constant at 22°C, and light condition was set for 12 hours for light period/12 hours for dark period using fluorescent light. For 15 days after sowing, the rockwool was soaked in a culture medium containing a 1,000-fold dilution of commercial liquid fertilizer (Vegeful liquid fertilizer, SUMITOMO CHEMICAL GARDEN PRODUCTS INC.) to grow Arabidopsis thaliana hydroponically. 15 days after sowing, 13 mL of two types of the treatment solutions each containing trihydroxyoctadecaenoic acid prepared above were added to respective rockwools, and the rockwools were left for 5 hours incubation, and then, the culture medium was replaced with the original medium and the plants were kept growing. No treatment solution was added to the negative control ("no treatment area").

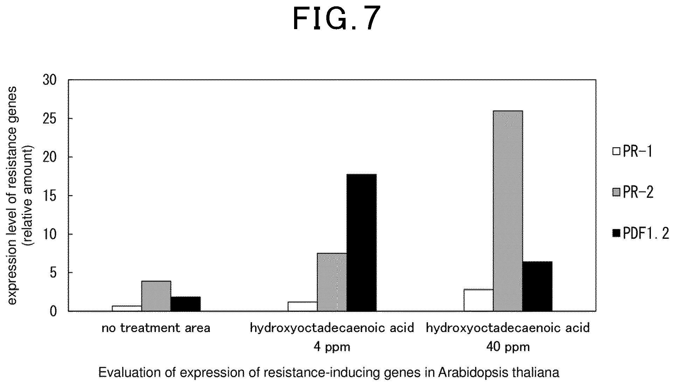

The expression levels of resistance genes PR-1, PR-2, and PDF1.2 were examined for Arabidopsis thaliana treated with respective treatment solutions 24 hours after the treatment and for the untreated cucumbers as controls, using the similar procedure to the one described in Example 3. Three Arabidopsis thaliana seedlings from the respective treatment area were studied, and the results of an average value of the expression levels obtained are shown in FIG 7. The types of resistance genes measured were based on "PLoS ONE, 1(1), e86882". The genes PR-1 and PR-2 are resistance genes associated with the salicylic acid mediated signaling pathway, and the gene PDF1.2 is a resistance gene associated with the jasmonate mediated signaling pathway.

As shown in FIG 5 (Example 3), FIG 6 (Example 4), and FIG 7 (Example 5), the increase in the expression levels of resistance genes was observed for tomato, Solanaceae family, cucumber, Cucurbitaceae family, and Arabidopsis thaliana, Brassicaceae family. It demonstrates that the plant activator of the present invention has an excellent disease suppression effect on plants.

The above results demonstrate that the plant activator of the present invention is an excellent plant activator that has low soil contamination and toxicity, promotes plant growth, and also suppresses plant diseases through the expression of resistance genes.

## Claims

1. A plant activator comprising, as an active ingredient, a hydroxy fatty acid derivative of general formula (I), or a salt or an ester thereof,
HOOC-(R¹)-CH(OH)-CH(OH)-CH=CH-CH(OH)-R² (I),
and/or of general formula (II), or a salt or an ester thereof,
HOOC-(R¹)-CH(OH)-CH=CH-CH(OH)-CH(OH)-R² (II),
wherein
R¹ is a straight or branched hydrocarbon group with 4 to 12 carbon atoms, and optionally comprises one or more double bonds and/or OH groups, and the position of the double bond is not limited, provided that the double bond is comprised, and
R² is a straight or branched hydrocarbon group with 2 to 8 carbon atoms, and optionally comprises one or more double bonds and/or OH groups, and the position of the double bond is not limited, provided that the double bond is comprised.

2. The plant activator of claim 1, wherein R¹ hydrocarbon group of the hydroxy fatty acid derivative has 6 to 8 carbon atoms, and R² hydrocarbon group of the hydroxy fatty acid derivative has 4 to 6 carbon atoms.

3. The plant activator of claim 1, wherein R¹ of the hydroxy fatty acid derivative is -(CH₂)ₙ- (wherein n is an integer from 4 to 12), and R² of the hydroxy fatty acid derivative is CₙH₂ₙ₊₁- (wherein n is an integer from 2 to 12).

4. The plant activator of claim 3, wherein R¹ of the hydroxy fatty acid derivative is an alkylene group (-(CH₂)₇-) with 7 carbon atoms, and R² of the hydroxy fatty acid derivative is an alkyl group (CH₃CH₂CH₂CH₂CH₂-) with 5 carbon atoms.

5. The plant activator of claim 4, wherein the hydroxy fatty acid derivative is hydroxyoctadecaenoic acid (hydroxyoctadecenoic acid).

6. The plant activator of claim 5, wherein the hydroxy fatty acid derivative is 9,10,13-trihydroxy-11-octadecaenoic acid (9,10,13-trihydroxy-11-octadecenoic acid).

7. The plant activator of claim 5, wherein the hydroxy fatty acid derivative is 9,12,13-trihydroxy-10-octadecaenoic acid (9,12,13-trihydroxy-10-octadecenoic acid).

8. The plant activator of any one of claims 1 to 7, wherein the plant activator further comprises a surfactant and/or a diluent or a carrier.

9. The plant activator of any one of claims 1 to 8, wherein a concentration of the hydroxy fatty acid derivative or the salt or the ester thereof is 0.05 to 5 mg/L.

10. The plant activator of any one of claims 1 to 9, wherein the plant activator is used as a spraying agent or an immersion agent for contacting with plant stems, leaves, or roots, or a soil injection agent.

11. The plant activator of any one of claims 1 to 10, wherein the plant activator is applied to at least one plant selected from plants in family Brassicaceae, Poaceae, Fabaceae, Solanaceae, Rosaceae, Amaranthaceae, Cucurbitaceae, or Malvaceae.
